# EUROPÄISCHE PATENTSCHRIFT

(11) **EP 1 315 408 B1**
(45) Veröffentlichungstag und Bekanntmachung des Hinweises auf die Patenterteilung: **14.01.2004**
(21) Anmeldenummer: 00958039.0
(22) Anmeldetag: 05.09.2000
(51) Int. Cl.: A01G 1/00, A01C 1/04

(54) **BEGRÜNUNGSMATTE**
PLANTING MAT
NATTE D'ENGAZONNEMENT

(43) Veröffentlichungstag der Anmeldung: 04.06.2003
(73) Patentinhaber: Bioinnova Verbundbauteile GmbH, 7561 Heiligenkreuz im Lafnitztal (AT)
(72) Erfinder: SCHOBER, Walter, A-3200 Obergrafendorf (AT)
(74) Vertreter: Hübscher, Helmut, Dipl.-Ing.
(86) Internationale Anmeldenummer: PCT/AT2000/000239
(87) Internationale Veröffentlichungsnummer: WO 2002/019797

(56) Entgegenhaltungen:
- EP-A- 0 724 825
- EP-A- 0 730 821
- DE-A- 2 044 835
- FR-A- 2 451 699
- GB-A- 1 319 603
- GB-A- 2 332 353

## Beschreibung

Die Erfindung bezieht sich auf eine Begrünungsmatte aus zwei miteinander vernadelten Vliesschichten, die zwischen sich Saatgut für eine Begrünung aufnehmen.

Um freie Bodenflächen einerseits vor Erosionseinflüssen zu schützen und anderseits einfach begrünen zu können, werden diese Bodenflächen mit Begrünungsmatten abgedeckt (AT 402 749 B), die aus zwei miteinander vernadelten Vliesschichten bestehen und zwischen den Vliesschichten entsprechendes Saatgut und allenfalls Nährstoffe für dieses Saatgut aufnehmen. Zusätzlich können an der. Unterseite der Begrünungsmatte Bewässerungsschläuche vorgesehen werden, die über eine Trägerschicht befestigt sind, wobei die Begrünungsmatte mit der Trägerschicht vernadelt wird. Über die Bewässerungsschläuche kann das Saatgut zum Auskeimen mit Wasser versorgt werden, was jedoch entsprechende Wasseranschlüsse und eine Steuerung der Wasserzufuhr erfordert. Abgesehen davon sind solche Begrünungsmatten mit integrierten Bewässerungsschläuchen konstruktiv aufwendig und schwierig zu verlegen, so daß sich der Einsatz dieser Begrünungsmatten auf Einzelfälle beschränkt.

Der Erfindung liegt somit die Aufgabe zugrunde, eine Begrünungsmatte der eingangs geschilderten Art so auszugestalten, daß ohne aufwendige Bewässerungsschläuche für ein vorteilhaftes Feuchtigkeitsangebot insbesondere während der Ankeimperiode des Saatgutes gesorgt werden kann, und zwar unabhängig von der Art des jeweils zu begrünenden Untergrundes.

Die Erfindung löst die gestellte Aufgabe dadurch, daß die beiden Vliesschichten auf eine offenporige, wasserspeichernde Schicht aufgebracht und mit dieser Schicht vernadelt sind.

Die Verbindung der beiden das Saatgut zwischen sich aufnehmenden Vliesschichten mit einer wasserspeichernden Schicht bietet die einfache Möglichkeit, nach einer Bewässerung der auf einen zu begrünenden Untergrund aufgelegten Begrünungsmatte einen Wasservorrat bereitzustellen, aus dem das Saatgut nach und nach mit der für die Keimung erforderlichen Feuchtigkeit versorgt werden kann. Die Offenporigkeit dieser wasserspeichernden Schicht bringt im Zusammenwirken mit den durch die Vernadelung in diese Schicht eingetragenen Vliesfasern vorteilhafte Voraussetzungen für einen günstigen Flüssigkeitsaustausch zwischen diesen Schichten mit sich, weil zu diesem Zweck die Kapillarwirkungen der offenporigen Schicht und der in diese Schicht eingenadelten Vliesfasern erfolgreich ausgenützt werden können.

Die wasserspeichernde Schicht kann unterschiedlich aufgebaut sein. Einfache Konstruktionsverhältnisse ergeben sich, wenn sie aus einer Schaumstoffmatte besteht, die je nach ihrer Dicke und ihrem Porenvolumen für die jeweils erforderliche, von der Art des zu begrünenden Untergrundes abhängige Wasseraufnahme sorgt. Soll eine wasserspeichernde Schicht vorgesehen werden, die einer Durchwurzelung nur wenig Widerstand entgegensetzt, so kann anstelle einer durchgehenden Schaumstoffmatte eine wasserspeichernde Schicht aus wasserspeichernden Teilchen aufgebaut werden, die zwischen den Vliesschichten einerseits und einer mit den Vliesschichten durch eine Vernadelung verbundenen Deckschicht anderseits gehalten werden. Diese wasserspeichernden Teilchen können aus einem Schaumstoffgranulat oder aus anderen wasserspeichernden Materialien bestehen, da es ja vor allem auf die Fähigkeit der wasserspeichernden Schicht ankommt, ausreichend Wasser aufzunehmen, um es anschließend nach Bedarf wieder abgeben zu können.

Muß damit gerechnet werden, daß der zu begrünende Untergrund einen Teil des gespeicherten Wassers aus der wasserspeichernden Schicht absaugt, so kann die wasserspeichernde Schicht auf der Unterseite mit einer wasserundurchlässigen Sperrschicht beispielsweise aus Latex versehen werden.

Soll die Begrünungsmatte zusätlich zur mechanischen Untergrundbefestigung herangezogen werden, so empfiehlt es sich, die mechanische Festigkeit der Begrünungsmatte zu vergrößern. Zu diesem Zweck kann die wasserspeichernde Schicht vorteilhaft mit einer Verstärkungsschicht verbunden werden, bevorzugt durch eine Vernadelung. Die Verstärkungsschicht kann dabei unterschiedlich aufgebaurt sein, je nachdem ob sie auf der den Vliesschichten abgekehrten oder zugewandten Seite vorgesehen wird. Auf der den Vliesschichten abgekehrten Seite kann sie gegebenenfalls aus der Sperrschicht gebildet werden.

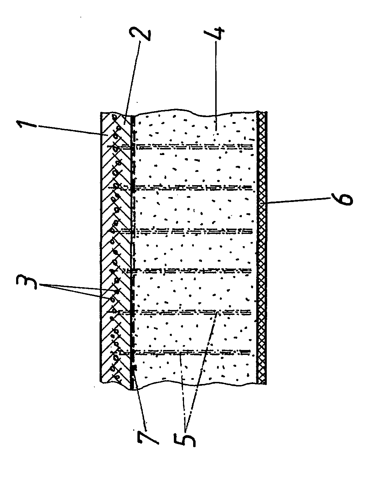

In der Zeichnung ist der Erfindungsgegenstand beispielsweise dargestellt, und zwar wird eine erfindungsgemäße Begrünungsmatte in einem schematischen Querschnitt ausschnittsweise dargestellt.

Gemäß dem Ausführungsbeispiel weist die Begrünungsmatte zwei Vliesschichten 1 und 2 auf, die jeweils aus einem vorgenadelten Vlies gebildet werden und beispielsweise aus einer Fasermischung aus Hanf- und Schafwollefasern bestehen. Zwischen diesen Vliesschichten 1 und 2 lagert körniges Saatgut 3. Zur Herstellung der Begrünungsmatte wird das körnige Saatgut 3 auf eine der beiden vorvernadelten Vliesschichten 1, 2 aufgestreut, bevor die jeweils andere Vliesschicht aufgelegt und die beiden Vliesschichten 1, 2 mit den dazwischen befindlichen Saatgutkörnern gemeinsam vernadelt werden.

Zum Unterschied von bekannten Begrünungsmatten dieser Art sind die beiden Vliesschichten 2 und 3 jedoch zusätzlich mit einer weiteren Schicht 4 vernadelt, die beispielsweise aus einer offenporigen Schaumstoffmatte besteht, um einen Wasserspeicher für das Saatgut 3 zu erhalten. Das nach einer Bewässerung der auf einen Untergrund aufgebrachten Begrünungsmatte durch die Vliesschichten 1 und 2 in die Schicht 4 einsickernde Wasser wird in den offenen Poren der Schaumstoffmatte gespeichert und kann wieder an das zwischen den Vliesschichten 1 und 2 eingebettete Saatgut 3 abgegeben werden. Durch die Vernadelung der Vliesschichten 1 und 2 mit der wasserspeichernden Schicht 4 werden durch die aus den Vliesschichten 1 und 2 in die Schicht 4 eingenadelten Fasern Faserbrücken 5 gebildet, wie sie in der Schnittdarstellung des Ausführungsbeispiels schematisch angedeutet sind. Über diese Faserbrücken 5 kann ein entsprechender Wasseraustausch zwischen den Schichten stattfinden, und zwar aufgrund einer Kapillarwirkung, die für eine gleichmäßige Feuchtigkeitsversorgung des Saatgutes 3 über die Fläche der Begrünungsmatte aus der wasserspeichernden Schicht 4 sorgt.

Um nicht einen unnötigen Flüssigkeitsverlust aus der wasserspeichernden Schicht 4 an den zu begrünenden Untergrund in Kauf nehmen zu müssen, kann beispielsweise bei einem sandigen Untergrund die wasserspeichernde Schicht 4 auf der Unterseite mit einer wasserundurchlässigen Sperrschicht 6 versehen werden, die aus einer aufgesprühten Latexschicht bestehen kann. Zusätzlich kann die wasserspeichernde Schicht 4 mit einer Verstärkungsschicht 7, beispielsweise einem Gewebe oder Gitter, verbunden werden, insbesondere dann, wenn die mechanische Festigkeit der Begrünungsmatte vergrößert werden soll, beispielsweise zur zusätzlichen Untergrundbefestigung.

Die Erfindung ist selbstverständlich nicht auf das dargestellte Ausführungsbeispiel beschränkt. So könnte die wasserspeichernde Schicht 4 anstelle einer Schaumstoffmatte eine Lage aus wasserspeichernden Teilchen bilden, die zwischen den Vliesschichten 1 und 2 und einer Deckschicht gehalten werden, die mit den Vliesschichten 1, 2 durch eine Vernadelung verbunden wird. Diese Deckschicht kann aus einem Textilgewebe oder einer Vliesschicht bestehen, die allenfalls als Sperrschicht 6 wirkt. Die Vernadelung der Vliesschichten 1 und 2 mit der wasserspeichernden Schicht 4 kann entweder gemeinsam mit der Vernadelung der beiden Vliesschichten 1 und 2 oder gesondert davon erfolgen. Mit dem Saatgut 3 kann naturgemäß auch Nährstoff für das Saatgut 3 zwischen die Vliesschichten 1 und 2 eingebracht werden, die unterschiedlich aufgebaut sein können.

## Patentansprüche

1. Begrünungsmatte aus zwei miteinander vernadelten Vliesschichten (1, 2), die zwischen sich Saatgut (3) für eine Begrünung aufnehmen, **dadurch gekennzeichnet, daß** die beiden Vliesschichten (1, 2) auf eine offenporige, wasserspeichernde Schicht (4) aufgebracht und mit dieser Schicht (4) vernadelt sind.

2. Begrünungsmatte nach Anspruch 1, **dadurch gekennzeichnet, daß** die wasserspeichemde Schicht (4) aus einer Schaumstoffmatte besteht.

3. Begrünungsmatte nach Anspruch 1, **dadurch gekennzeichnet, daß** die wasserspeichernde Schicht (4) wasserspeichernden Teilchen aufweist, die zwischen den Vliesschichten (1, 2) einerseits und einer mit den Vliesschichten (1, 2) durch eine Vernadelung verbundenen Deckschicht anderseits gehalten sind.

4. Begrünungsmatte nach einem der Ansprüche 1 bis 3, **dadurch gekennzeichnet, daß** die wasserspeichernde Schicht (4) auf der Unterseite mit einer wasserundurchlässigen Sperrschicht (6) versehen ist.

5. Begrünungsmatte nach einem der Ansprüche 1 bis 4, **dadurch gekennzeichnet, daß** die wasserspeichernde Schicht (4) mit einer Verstärkungsschicht (7) verbunden ist.

## Claims

1. A planting mat made up of two needle-bonded nonwoven layers (1, 2) holding seeds (3) between them for grass, **characterised in that** the two nonwoven layers (1, 2) are placed on an open-pore water-storing layer (4) and needle-bonded thereto.

2. A planting mat according to claim 1, **characterised in that** the water-storing layer (4) is a foam mat.

3. A planting mat according to claim 1, **characterised in that** the water-storing layer (4) comprises water-storing particles held on the one hand between the nonwoven layers (1, 2) and on the other hand by a cover layer connected to the nonwoven layers (1, 2) by needle-bonding.

4. A planting mat according to any of claims 1 to 3, **characterised in that** the water-storing layer (4) is provided with a waterproof barrier layer (6) on the underside.

5. A planting mat according to any of claims 1 to 4, **characterised in that** the water-storing layer (4) is connected to a reinforcing layer (7).

## Revendications

1. Natte d'engazonnement, formée de deux couches de matelas (1 , 2) aiguilletée ensemble, recevant entre elles de la semence (3) pour un engazonnement, **caractérisée en ce que** les deux couches de matelas (1, 2) sont appliquées sur une couche (4) à pores ouverts, stockant l'eau, et aiguilletées à cette couche (4).

2. Natte d'engazonnement selon la revendication 1, **caractérisée en ce que** la couche (4) stockant l'eau est formée d'une natte de matériau alvéolaire.

3. Natte d'engazonnement selon la revendication 1, **caractérisée en ce que** la couche (4) stockant l'eau présente des particules stockant l'eau, maintenues entre les couches de matelas (1, 2), d'une part, et une couche de couverture, reliée aux couches de matelas (1, 2) par un aiguilletage, d'autre part.

4. Natte d'engazonnement selon l'une des revendications 1 à 3, **caractérisée en ce que** la couche (4) stockant l'eau est munie, en face inférieure, d'une couche formant barrière (6), imperméable à l'eau.

5. Natte d'engazonnement selon l'une des revendications 1 à 4, **caractérisée en ce que** la couche (4) stockant l'eau est reliée à une couche de renforcement (7).
